(19) Europäisches Patentamt
European Patent Office
Office européen des brevets

(11) Veröffentlichungsnummer: 0 238 825
B1

(12) # EUROPÄISCHE PATENTSCHRIFT

(45) Veröffentlichungstag der Patentschrifft: 21.03.90

(51) Int. Cl. 5: C 07 F 9/38, C 08 K 5/53, C 08 F 2/26

(21) Anmeldenummer: 87101828.9

(22) Anmeldetag: 10.02.87

(54) **2-Phosphonobutan-1,2,4-tricarbonsäurederivate als Emulgatoren.**

(30) Priorität: 22.02.86 DE 3605800

(43) Veröffentlichungstag der Anmeldung: 30.09.87 Patentblatt 87/40

(45) Bekanntmachung des Hinweises auf die Patenterteilung: 21.03.90 Patentblatt 90/12

(84) Bennante Vertragsstaaten: DE ES FR GB IT

(56) Entgegenhaltungen:
EP-A-0 019 701

CHEMICAL ABSTRACTS, Band 101, Nr. 13, 24. September 1984, Seite 681, Zusammenfassung Nr. 111197t, Columbus, Ohio, US; JP-59 29 697 (SAKAI CHEMICAL INDUSTRY CO., LTD) 16-02-1984

(73) Patentinhaber: BAYER AG
D-5090 Leverkusen 1 Bayerwerk (DE)

(72) Erfinder: Schmidt, Adolf, Dr.
Roggendorfstrasse 67
D-5000 Köln 80 (DE)
Erfinder: Hendricks, Udo, Dr.
Am Höhenfeld 12
D-5068 Odenthal (DE)

EP 0 238 825 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBERGRAF, STOCKHOLM 1990

**Beschreibung**

Die Erfindung betrifft 2-Phosphonobutan-1,2,4-tricarbonsäurederivate der allgemeinen Formel (I), die durch Umsetzung der Tricarbonsäure (II) (2-Phosphonobutan-1,2,4-tricarbonsäure; "TBSAM") mit $C_{6-20}$-Alkoholen und gegebenenfalls anschließende Neutralisierung erhältlich und als Hilfsmittel (Emulgatoren) zur Emulsionspolymerisation geeignet sind.

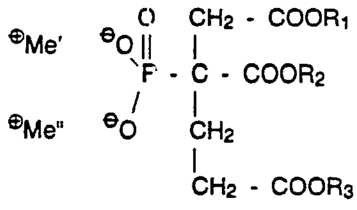

(I)

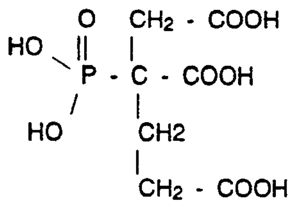

(II)

In Formel (I) bedeuten $^{\oplus}$Me' und $^{\oplus}$Me" unabhängig voneinander ein einwertiges Kation, insbesondere von Kalium, Natrium, Lithium oder Ammonium. Die Reste $R_1$ bis $R_3$ unabhängig voneinander $C_{6-20}$-Alkyloder Cycloalkylreste, und einer oder zwei dieser Reste unabhängig voneinander auch $^{\oplus}$Me'.

Aus der EP-A-4062 ist bekannt, wäßrige Dispersionen von Vinylpolymeren in Gegenwart eines Emulgators und mindestens eines als Dispergiermittel wirkenden Salzes eines Phosphonsäurederivats mit mindestens zwei Phosphoratomen herzustellen. Die derart zugänglichen Kunstoffdispersionen eignen sich als Überzugsmittel und zum Imprägnieren, Beschichten und Verkleben fester Materialien. Um zu stabilen Polymerisatdispersionen zu gelangen, ist die Mitverwendung üblicher Emulgatoren jedoch zwingend vorgeschrieben.

Aus der DE-OS-2 723 834 sind Umsetzungsprodukte von Phosphoncarbonsäuren mit Alkoholen bekannt, die durch Vermischung von Phosphoncarbonsäuren mit ein- und/oder mehrwertigen Alkoholen im Molverhältnis von etwa 50 : 1 bis 1 : 50 hergestellt werden. Als Alkoholkomponente kommen n-Alkanole mit bis zu 6 C-Atomen, Cyclohexanol, sowie Alkohole mit mehr als einer OH-Gruppe in Betracht. Diese Mischungen werden als Mittel zur Konditionierung von Wasser und wäßrigen Schlämmen verwendet. Als Emulgatoren für die Emulsionspolymerisation sind solche Abmischungen nicht geeignet.

Aus der EP-A-19 701 ist es schließlich bekannt, ABS-Formmassen mit verbesserten Oberflächeneigenschaften unter Verwendung von Phosphoncarbonsäurederivaten (III) herzustellen,

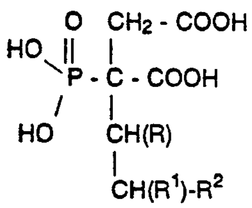

(III)

worin

R: Wasserstoff, $C_{1-4}$-Alkyl oder Carboxyl,
$R^1$: Wasserstoff oder Methyl,
$R^2$: Carboxyl

bedeuten.

Als Emulgatoren in der Emulsionspolymerisation sind diese Verbindungen nicht geeignet, sie wirken koagulierend.

Gegenstand der Erfindung sind Derivate der 2-Phosphonobutan-1,2,4-tricarbonsäure gemäß Formel (I),

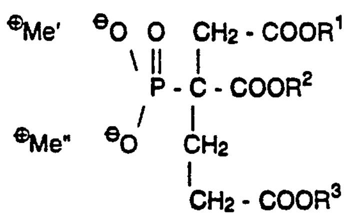

(I)

in der

$^{\oplus}$Me' und $^{\oplus}$Me" unabhängig voneinander Wasserstoff, Natrium, Kalium, Lithium oder Ammonium und die Reste $R^1$ bis $R^3$ unabhängig voneinander Alkylreste und/oder Cycloalkylreste mit 6 bis 20 C-Atomen bedeuten,

und einer oder zwei dieser Reste $R^1$ bis $R^3$ unabhängig voneinander auch $^{\ominus}Me'$.

Ein weiterer Gegenstand ist ein Verfahren zur Herstellung von Derivaten der 2-Phosphonobutan-1,2,4-tricarbonsäuren, dadurch gekennzeichnet, daß eine Mischung von 2-Phosphonobutan-1,2,4-tricarbonsäure und Wasser mit $C_{6-20}$-Alkoholen im molaren Verhältnis 1 : 1 bis 1 : 4 für Säure zu Alkohol und gegebenenfalls als Schlepper fungierenden Lösungsmitteln unter Abscheidung und Abtrennung von Wasser, gegebenenfalls unter Zusatz die Veresterung katalysierender Zusätze, erhitzt und das noch saure Reaktionsgemisch nach dem Entfernen der als Schlepper verwendeten Lösungsmittel und gegebenenfalls überschüssiger Alkoholbestandteile in Wasser unter Zusatz alkalisch reagierender wäßriger Lösungen gelöst oder emulgiert wird.

Ebenfalls Gegenstand der Erfindung ist die Verwendung der 2-Phosphonobutan-1,2,4-tricarbonsäurederivate der Formel (I) als Emulgator.

Die erfindungsgemäßen 2-Phosphonobutan-1,2,4-tricarbonsäurederivate können beispielsweise wie folgt hergestellt werden.

Man verestert Verbindungen der Formel (II) mit $C_{6-20}$-Alkanolen, wobei das bei der Reaktion entstehende Wasser entfernt wird.

Hierzu wird die Verbindung (II) mit 1 bis 3 Mol eines $C_{6-20}$-Alkanols unter Wasserabspaltung und Entfernung dieses Wassers zur Reaktion gebracht. Dieses Reaktionswasser kann dabei entweder aus dem Gemisch bzw. der Schmelze der Ausgangsprodukte unter vermindertem Druck oder azeotrop mit Hilfe eines geeigneten Schleppers wie Toluol entfernt werden.

Bei der Veresterung der Phosphonocarbonsäure (II) werden ausschließlich die Carboxylgruppen verestert. Veresterungsreaktion dieser Art sind dem Fachmann bekannt.

Nach der Entfernung des Reaktionswassers und des als Schlepper verwendeten Lösungsmittels wird der Rückstand unter Zugabe wäßriger Lösungen von KOH, NaOH, $NH_3$ oder basisch reagierender organischer Verbindungen in warmem Wasser gelöst oder emulgiert. Der pH-Wert soll dabei zwischen 5 und 10, vorzugsweise zwischen 6 und 8, liegen. Bevorzugte Basen sind Kaliumhydroxid und/oder Natriumhydroxid.

Durch Variation des molaren Einsatzverhältnisses von Phosphonobutantricarbonsäure zu Alkanol sowie auch durch das Molekulargewicht des Alkanols lassen sich die Emulgatoreigenschaften der erfindungsgemäßen 2-Phosphonotricarbonsäurederivate bezüglich ihrer Fähigkeit, fein- oder grobteiligere Latices zu erzeugen, verändern.

In einer Ausführungsform werden Umsetzungsprodukte von 1 Mol der 2-Phosphonobutan-1,2,4-tricarbonsäure mit 1 Mol eines $C_{10-20}$-Alkanols hergestellt. Diese Umsetzungsprodukte entsprechen - nach Neutralisation - der Formel (I) worin nur einer der Reste $R_1$ - $R_3$ ein Alkylrest ist. (Es entstehen so natürlich Gemische verschiedener Verbindungen). Mit diesen Verbindungen als Emulatoren sind Latices mit Teilchendurchmessern < 100 nm zugänglich. Wird in einer weiteren Ausführungsform 1 Mol der 2-Phosphonobutan-1,2,4-tricarbonsäure mit 2 Mol eines $C_{8-20}$-Alkanols umgesetzt, so erhält man - nach Neutralisation - ebenfalls Umsetzungsprodukte, die der Formel (I) entsprechen, worin aber 2 der Reste $R_1$ - $R_3$ Alkylreste sind. (Auch hier entstehen Gemische von Verbindungen). Diese Verbindungen ermöglichen als Emulgatoren die Herstellung von Latices mit Teilchendurchmessern von ca. 100 bis 350 nm.

Setzt man schließlich 1 Mol der Tricarbonsäure (II) mit 3 Mol $C_{6-20}$-Alkanol um, so erhält man Reaktionsprodukte, die ebenfalls - nach Neutralisation - der Formel (I) entsprechen, worin aber die drei Reste $R_1$ bis $R_3$ Alkylreste sind. Diese Verbindungen sind insbesondere bei höherer Kettenlänge selbst in der Salzform nur schwer wasser-, jedoch verstärkt monomerenlöslich. Sie ermöglichen als Emulgatoren die Herstellung von grobteiligen Latices mit Teilchendurchmessernb > 200 nm, wenn die Alkoholreste sehr lang oder sperrig angeordnet sind.

Als Alkohole (Alkanole) kommen $C_{6-20}$-n-Alkanole, verzweigte $C_{6-20}$-Alkanole wie 2-Ethylhexanol und/oder cyclische $C_{6-20}$-Alkanole wie Cyclohexanol oder Dehydroabietylalkohol in Betracht. Beispiele sind n-Hexanol, n-Octanol, n-Decanol, n-Dodecanol, Stearylalkohol, n-Octadecanol.

Die mit Hilfe der Emulgatoren vom Formeltyp (I) hergestellten Polymerisate zeigen bei thermischer Belastung eine nur geringe Verbräunungstendenz, insbesondere bei diesbezüglich an sich empfindlichen Polymerisaten wie Polybutadien.

Fügt man neutralisierte oder saure Umsetzungsprodukte eines Mols Alkohol mit 1 Mol 2-Phosphonobutan-1,2,4-tricarbonsäure zu Latices, z. B. einem Polybutadienlatex, hinzu, so zeigen aus diesem Latex hergestellte Filme bei Wärmebelastung eine erheblich geringere Vergilbung als Filme aus dem unbehandelten Latex. Insbesondere läßt sich die Rohtonqualität von Polybutadienlatex-Filmen aus solchen Latices, die mit herkömmlichen Emulgatoren hergestellt wurden, durch den Zusatz von Emulgatoren des 2-Phosphonobutan-1,2,4-tricarbonsäure-Typs verbessern.

Die erfindungsgemäßen Emulgatoren zeichnen sich außerdem durch eine schwere Flüchtigkeit und geringe Tendenz zur Eintrübung von Polymeren aus.

Mit herkömmlichen Emulgatoren hergestellte Latices können mit sauren Estern der 2-Phosphonobutan-1,2,4-tricarbonsäure koaguliert werden. Die Eigenschaften derartiger Koagulate sind gegenüber denen nach üblichen Verfahren der Koagulation erhaltenen im Hinblick auf die Farbstabilität bei thermischer Belastung verbessert.

Mit Hilfe der erfindungsgemäßen Emulgatoren lassen sich Monomere wie Butadien, Ethylen, Chloropren, Vinylchlorid, Isopren, Vinylbromid, Vinylfluorid, Styrol, p-Chlorstyrol, p-Methylstyrol, Acrylsäureester wie Methylacrylat, Ethylacrylat, n-Butylacrylat, 2-Ethylhexylacrylat, Methacrylsäureester wie Methylmethacrylat, n-Butylmethacrylat, Vinylester wie Vinylacetat, Vinylpropionat, Vinylversat polymerisieren oder copolymerisieren. Als weitere mit den genannten Monomeren copolymerisierbare Monomere seien α-Methylstyrol, Acrylnitril und Methacrylnitril genannt.

Besonders bevorzugt sind Homopolymerisate des Butadiens und Copolymerisate des Butadiens mit Styrol und/oder Acrylnitril oder Acrylestern wie n-Butylacrylat. Ferner Copolymerisate des Styrols mit n-Butylacrylat. Zur weiteren Verbesserung der mechanischen Stabilität der Dispersionen oder zur Modifizierung von Eigenschaften wie Haftung, Rheologie und Vernetzbarkeit können neben den genannten Hauptmonomeren noch hydrophile Gruppen tragende Comonomere wie Acrylsäure, Methacrylsäure, Acrylamid, Methacrylamid, Maleinsäurehalbester, Fumarsäurehalbester oder vernetzergruppenhaltige Comonomere wie z. B. n-Methylolmethacrylamid oder dessen Methylether mitverwendet werden. Ebenso können Vernetzer vom Bisacrylattyp oder Triallylcyanurat eingesetzt werden. Auf diese Weise können Latices für Anstrichmassen, Papierstreichmassen, Binder für den Textildruck, die Teppichrückenbeschichtung und die Zurichtung von Leder hergestellt werden. Der besonders bevorzugte Anwendungsbereich der erfindungsgemäßen Emulgatoren liegt bei der Herstellung von Kautschuklatices, die als Grundlage zur Herstellung von Pfropfprodukten dienen. Auch bei der nachfolgenden Pfropfpolymerisationen selbst werden die erfindungsgemäßen Emulgatoren vorteilhaft eingesetzt.

Zur Initiierung von Polymerisationsreaktionen unter Verwendung der erfindungsgemäßen Emulgatoren können die üblichen Radikalbildner, wie sie z. B. in: Houben-Weyl, Band XIV/1, Seite 209 - 297 (G. Thieme Verlag, Stuttgart, 1961) beschrieben sind, im Temperaturbereich von +5 bis +95°C verwendet werden. Die Initiatoren können wasserlöslich oder auch monomerlöslich sein.

In den folgenden Beispielen sind die angegebenen Konzentrationen stets Gew.-%, wenn nicht anders bezeichnet.

**Beispiel 1**

Herstellung eines Emulgators aus 1 Mol PBSAM mit 1 Mol Stearylalkohol

270 Gew.-Tle 2-Phosphonobutan-1,2,4-tricarbonsäure, 270 Gew.-Tle entsalztes Wasser, 270 Gew.-Tle Stearylalkohol und 800 Gew.-Tle Toluol werden vermischt und am Wasserabscheider zum Rückfluß erhitzt. Nach der vollständigen Abscheidung des Wassers wird das Toluol im Vakuum abdestilliert und der Rückstand vor dem Abkühlen mit verdünnter Natronlauge verrührt, ein pH-Wert von 9,5 und ein Feststoffgehalt von 10 % eingestellt. Diese 10-%-ige wäßrige Lösung wird als Emulgator verwendet.

Polymerisation

In einen Edelstahlautoklaven mit Außenmanteltemperierung und elektronischer Regelung der Innentemperatur, verstellbarem Rührwerk, Druck-, Temperatur- sowie pH-Messung werden unter dem Ausschluß von Sauerstoff eingefüllt:

| | |
|---|---|
| Entionisiertes Wasser | 2023,0 Gew.-Tle |
| 10-%-ige Emulgatorlösung | 547,0 Gew.-Tle |
| tert.-Dodecylmercaptan | 5,7 Gew.-Tle |
| Butadien | 1832,0 Gew.-Tle. |

Unter Rühren mit einem Blattrührer (120 $min^{-1}$) wird auf 65°C aufgeheizt, wonach 175 Gew.-Tle 2,5-%-igen Kaliumpersulfatlösung zugegeben werden.

Nach 15 Stunden ist ein Latex mit einem Feststoffgehalt von 40 % und einem mittleren Latexteilchendurchmesser von 70 nm (DAV, siehe DIN 53 206) entstanden. Bei der anschließenden Entgasung im Vakuum schäumt der Latex nicht. Er besitzt eine Viskosität von 25 centipoise (gemessen im Brookfield-Viskosimeter, Spindel 1 bei 6 - 60 UPM, 25°C und einem Feststoffgehalt von 40 %).

Aus diesem Latex gezogene Filme, die mit Hilfe einer Lackhantel auf 90 µm Naßfilmdicke gebracht, zunächst bei Raumtemperatur getrocknet und anschließend 120 min bei 150°C gelagert werden, sind nach dieser Zeit noch nahezu farblos.

Der so hergestellt Latex läßt sich nach der Einstellung eines pH-Wertes von 9,0 mit Hilfe eines Homogenisators vom Typ Manton Gaulin bei 20°C und 400 bar zu einem Agglomerat mit einem mittleren Teilchendurchmesser von 250 nm (DAV) nach an sich bekannten Methoden druckagglomerieren. Diese Druckagglomerate können als Pfropfgrundlagen zur Herstellung von ABS oder sonstigen thermoplastischen Formmassen dienen.

**Beispiel 2**

Herstellung eines Emulgators aus 1 Mol PBSAM mit 2 Mol n-Octanol

Eine Mischung von 160 Gew.-Tln PBSAM, 160 Gew.-Tln entsalzten Wassers, 300 Gew.-Tln Toluol und 156 Gew.-Tln n-Octanol wird am Wasserabscheider zum Sieden erhitzt, bis das Destillat wasserfrei und klar übergeht. Anschließend wird das Toluol im Vakuum entfernt und das zurückbleibende zähflüssig-bräunliche Öl (285 Gew.-Tle) gleichzeitig mit 20-%-iger Kalilauge bei 50°C in 750 Gew.-Tle entsalztes Wasser eingerührt, wobei die Basenzufuhr so gesteuert wird, daß die Lösung ständig neutral reagiert. Anschließend kühlt man auf 20°C ab und stellt den pH-Wert der erkalteten Lösung auf 8,5 ein. Die so erhaltene Emulgatorlösung wird auf einen Feststoffgehalt von 15 % eingestellt.

Polymerisation

In einen Autoklaven (analog zu Beispiel 1) werden eingefüllt:

| | |
|---|---|
| Entionisiertes Wasser | 4130,0 Gew.-Tle |
| Natriumhydrogencarbonat | 9,2 Gew.-Tle |
| 15-%-ige Emulgatorlösung | 500,0 Gew.-Tle |
| tert.-Dodecylmercaptan | 13,1 Gew.-Tle |
| Butadien | 3280,0 Gew.-Tle. |

Wie in Beispiel 1 beschreiben, wird auf 65°C aufgeheizt und anschließend werden 350 Gew.-Tle 2,5-%-ige Kaliumperoxodisulfatlösung zugegeben.

Nach 20 Stunden erhält man einen bläulich schimmernden Latex mit einem Feststoffgehalt von 40 %, der frei von Koagulat oder Stippen ist. Der mittlere Latexteilchendurchmesser liegt bei: 86 nm (DAN), 101 nm (DAF), 110 nm (DAV), ermittelt durch Ultrazentrifugenmessung.

**Beispiel 3**

Herstellung eines Emulgators aus 1 Mol PBSAM und 2 Mol n-Dodecanol

Eine Mischung von 122 Gew.-Tln PBSAM, 122 Gew.-Tln entsalzten Wassers, 171 Gew.-Tln n-Dodecanol und 300 Gew.-Tln Toluol werden bis zum Übergang von klarem Destillat am Wasserabscheider zum Sieden erhitzt und anschließend im Vakuum eingeengt. Der Rückstand wird unter gleichzeitiger Zugabe von 20-%-iger Kalilauge in warmes Wasser eingerührt, wobei die Basenzufuhr so gesteuert wird, daß die Mischung neutral reagiert. Nach dem Abkühlen wird der pH-Wert auf 8,5 eingestellt und die entstehende Emulsion auf einen Feststoffgehalt von 15 % gebracht.

Polymerisation

Unter Verwendung dieser Emulgatorlösung wird der Ansatz des Beispiels 2 wiederholt, man stellt zwischen dem Feststoffgehalt des erhaltenen Latex und der Polymerisationszeit folgenden Zusammenhang fest:

| Polymerisationszeit [h] | Feststoffgehalt [%] |
|---|---|
| 5 | 10 |
| 10 | 29 |
| 15 | 38 |
| 20 | 40 |

Der koagulatfreie, bläulich schimmernde Latex enthält keine Stippen. Der Latexteilchendurchmesser beträgt: 80 nm (DAN), 91 nm (DAF), 98 nm (DAV), ermittelt durch Ultrazentrifugenmessung.

**Beispiel 4**

Herstellung eines Emulgators aus 1 Mol PBSAM und 3 Mol n-Octanol

Eine Mischung aus 117 Gew.-Tln PBSAM, 117 Gew.-Tln entsalzten Wassers, 170 Gew.-Tln n-Octanol werden analog Beispiel 2 am Wasserabscheider erhitzt, bis kein Wasser mehr übergeht. Das nach dem Entfernen des Toluols zurückbleibende bräunliche Öl (266 Gew.-Tle) wird in warmes Wasser unter gleichzeitigem Zusatz von 20-%-iger Kalilauge eingetropft, so daß die Mischung neutral reagiert. Anschließend wird auf pH 8 eingestellt. Die resultierende Emulsion wird auf einen Feststoffgehalt von 15 % eingestellt.

Polymerisation

In einen Autoklaven werden wie in Beispiel 2 beschrieben eingebracht:

| | |
|---|---|
| Entsalztes Wasser | 2056,0 Gew.-Tle |
| Natriumhydrogencarbonat | 4,6 Gew.-Tle |
| tert.-Dodecylmercaptan | 6,6 Gew.-Tle |
| 15-%-ige Emulgatorlösung | 250,0 Gew.-Tle |
| Butadien | 1640,0 Gew.-Tle. |

Nach dem Erhitzen auf 65°C werden 200 Gew.-Tle einer 2,5-%-igen Kaliumpersulfatlösung hinzugegeben. Zwischen

der Polymerisationszeit und dem Feststoffgehalt des Latex findet man folgenden Zusammenhang:

| *Polymerisationszeit [h]* | *Feststoffgehalt [%]* |
|---|---|
| 5 | 8 |
| 10 | 14 |
| 15 | 21,5 |
| 20 | 28,5 |
| 25 | 33 |
| 30 | 38 |
| 40 | 40. |

Der koagulatfreie Latex erscheint in der Aufsicht grün und in der Durchsicht rot. Der Latexteilchendurchmesser beträgt: 160 nm (DAN), 174 nm (DAF), 181 nm (DAV), ermittelt durch Ultrazentrifugenmessung.

**Beispiel 5**

Herstellung eines Emulgators aus 1 Mol PBSAM und 3 Mol n-Hexanol

Eine Mischung aus 135 Gew.-Tln PBSAM, 135 Gew.-Tln entsalzten Wassers, 153 Gew.-Tln n-Hexanol, 400 Gew.-Tln Toluol und 0,5 Gew.-Tln p-Toluolsulfonsäure wird bis zum Übergang von wasserfreiem Destillat am Wasserabscheider zum Sieden erhitzt. Die klare Lösung wird eingeengt und der lösungsmittelfreie Rückstand (240 Gew.-Tle eines braunen Öls) gleichzeitig mit 20-%-iger Kalilauge in 500 Gew.-Tln Wasser von 70°C so zugetropft, daß ein pH-Wert von 8 eingehalten wird.

Durch die Zugabe von Wasser wird die Emulsion anschließend auf einen Feststoffgehalt von 15 % eingestellt.

Polymerisation

In einen Autoklaven werden entsprechend dem Beispiel 1 eingebracht:

| | |
|---|---|
| Entsalztes Wasser | 2086,0 Gew.-Tle |
| Natriumhydrogencarbonat | 4,6 Gew.-Tle |
| tert.-Dodecylmercaptan | 6,6 Gew.-Tle |
| 15-%-ige Emulgatorlösung | 272,0 Gew.-Tle |
| Butadien | 1640,0 Gew.-Tle. |

Nach dem Aufheizen auf 65°C werden 200 Gew.-Tle einer 2,5-%-igen Kaliumperoxodisulfatlösung zugegeben.

Nach 40 Stunden ist ein Feststoffgehalt von 37 % erreicht. Der mittlere Durchmesser der Latexteilchen beträgt: 171 nm (DAN), 195 nm (DAF), 204 nm (DAV), ermittelt durch Ultrazentrifugenmessung.

**Beispiel 6**

Herstellung eines Emulgators aus 1 Mol PBSAM und 3 Mol n-Dodecanol

Eine Mischung aus 135 Gew.-Tln PBSAM, 135 Gew.-Tln salzfreiem Wasser, 279 Gew.-Tln n-Dodecanol, 1 Gew.-Tl p-Toluolsulfonsäure und 400 Gew.-Tln Toluol werden bis zum Übergang von klarem Destillat am Wasserabscheider zum Sieden erhitzt und anschließend im Vakuum eingeengt. Der Rückstand, 360 Gew.-Tle eines gelben Öls, wird auf 100°C erhitzt und in 750 Gew.-Tle Wasser mit einer Temperatur von 60°C eingerührt, wobei durch die gleichzeitige Zugabe 20-%-iger Kalilauge der pH-Wert der Mischung auf 6 eingestellt wird. Nach dem Abkühlen auf 25°C werden der pH-Wert auf 8,5 und der Feststoffgehalt der Emulsion auf 15 Gew.-% eingestellt.

Polymerisation

In einen Autoklaven werden entsprechend dem Beispiel 1 eingebracht:

| | |
|---|---|
| Entsalztes Wasser | 2071,0 Gew.-Tle |
| Natriumhydrogencarbonat | 4,6 Gew.-Tle |
| tert.-Dodecylmercaptan | 6,6 Gew.-Tle |
| 15-%-ige Emulgatorlösung | 272,0 Gew.-Tle |
| Butadien | 1640,0 Gew.-Tle. |

Nach dem Aufheizen auf 65°C werden 200 Gew.-Tle einer 2,5-%-igen Kaliumperoxodisulfatlösung zugegeben.

Nach 30 Stunden ist ein Feststoffgehalt des Latex von 38 % erreicht. Der mittlere Durchmesser der Latexteilchen beträgt: 129 nm (DAN), 145 nm (DAF), 160 nm (DAV), ermittelt durch Ultrazentrifugenmessung.

**Beispiel 7**

Herstellung eines Emulgators aus 1 Mol PBSAM und 2 Mol n-Octadecanol

Eine Mischung aus 102 Gew.-Tln PBSAM, 101 Gew.-Tln entsalztem Wasser, 204 Gew.-Tln n-Octadecanol, 400 Gew.-Tln Toluol und 1 Gew.-Tl p-Toluolsulfonsäure wurden bis zum Übergang von klarem Destillat am Wasserabscheider zum Sieden erhitzt und anschließend im Vakuum eingeengt. Das zurückbleibende bräunliche Öl wird noch heiß (100°C) in 750 Gew.-Tle Wasser mit einer Temperatur von 60°C getropft, gleichzeitig wird durch die Zugabe 20-%-iger Kalilauge der pH-Wert der Mischung auf 6 - 7 gehalten. Nach dem Abkühlen auf 25°C werden der pH-Wert auf 8,5 und der Feststoffgehalt der Emulsion auf 15 eingestellt.

Polymerisation

In einen Autoklaven werden entsprechend dem Beispiel 1 eingebracht:

| | |
|---|---|
| Entsalztes Wasser | 4120,0 Gew.-Tle |
| Natriumhydrogencarbonat | 9,2 Gew.-Tle |
| tert.-Dodecylmercaptan | 13,2 Gew.-Tle |
| 15-%-ige Emulgatorlösung | 544,0 Gew.-Tle |
| Butadien | 3280,0 Gew.-Tle |

Nach dem Aufheizen auf 65°C werden 400 Gew.-Tle einer 2,5-%-igen Kaliumperoxidsulfatlösung zugegeben.

Nach 55 Stunden ist ein Feststoffgehalt des Latex von 38 % erreicht. Der mittlere Durchmesser der Latexteilchen beträgt: 175 nm (DAN), 219 nm (DAF), 240 nm (DAV), ermittelt durch Ultrazentrifugenmessung.

**Beispiel 8**

Die Polymerisation von Styrol erfolgte mit den nachstehenden Emulgatoren:

Emulgator I: Emulgator nach Beispiel 2
Emulgator II: Emulgator nach Beispiel 3
Emulgator III: Emulgator nach Beispiel 4

Bezogen auf das Monomere wurden folgende Emulgatorkonzentrationen eingesetzt:

Versuchsreihe A: 0,3 Gew.-%
Versuchsreihe B: 0,7 Gew.-%
Versuchsreihe C: 1,5 Gew.-%
Versuchsreihe D: 3,0 Gew.-%
Versuchsreihe E: 5,0 Gew.-%

(Die Gew.-%-Angaben beziehen sich auf Styrol).

Bezogen auf Styrol wurden bei allen Versuchen 0,3 Gew.-% Kaliumperoxodisulfat und 0,2 Gew.-% Natriumhydrogencarbonat eingesetzt. Die Polymerisation erfolgte bei 65°C während 10 Stunden. Das Verhältnis (Monomer):(Monomer+Wasser) betrug bei allen Versuchen 0,3.

Die Polymerisationsversuche wurden in Reagenzgläsern in einem temperierbaren Laborgerät (Vortex-Vibrator) durchgeführt.

Feststoffgehalte und mittlere Teilchendurchmesser der enthaltenen Latices sind in Tabelle 1 zusammengefaßt.

Der mittlere Latexteilchendurchmesser nimmt mit steigender Emulgatormenge bei Verwendung der Emulgatoren I und II ab.

Eine geringere Abnahme des mittleren Teilchendurchmessers ist bei der Verwendung des Emulgators III feststellbar. Bei sehr geringen Emulgatormengen (0,3 Gew.-%) kann der Feststoffgehalt der Latices weit unter dem maximalen Wert von 30 Gew.-% liegen. Der durch Umsatz von 1 Mol PBSAM mit 3 Mol n-Octanol erhaltene Emulgator III erlaubt die Herstellung von grobteiligen, nahezu monodispersen, in ihren Teilchendurchmessern nur wenig mit der Emulgatorkonzentration variierende Latices.

**Tabelle 1** (Beispiel 8)

| Versuchsreihe | Emulgator I | | Emulgator II | | Emulgator III | |
|---|---|---|---|---|---|---|
| | FG | D | FG | D | FG | D |
| A | 17 | 219 | 20 | 190 | 15 | 230 |
| B | 29 | 196 | 28 | 160 | 28 | 263 |
| C | 29 | 142 | 30 | 143 | 28 | 243 |
| D | 30 | 113 | 30 | 126 | 29 | 197 |
| E | 30 | 112 | 29 | 114 | 30 | 198 |

FG: Feststoffgehalt [Gew.-%]
D: mittlerer Teilchendurchmesser [nm] (DAV)

**Beispiel 9**

Eine Mischung aus:

| | |
|---|---|
| Entsalztem Wasser | 121,5 Gew.-Tle |
| n-Butylacrylat | 107,0 Gew.-Tle |
| Emulgator gemäß Beispiel 3, (5-%-ige wäßrige Lösung) | 65,0 Gew.-Tle |
| 1-%-ige wäßrige Kaliumperoxodisulfatlösung | 32,0 Gew.-Tle |

wird während 7 Stunden bei 70°C unter Ausschluß von Sauerstoff unter Rühren polymerisiert. Es entsteht ein koagulatfreier Latex mit einem mittleren Teilchendurchmesser von 100 nm. Der Latex trocknet zu klaren farblosen Filmen auf, die sich im Trockenschrank nach 60 Minuten bei 150°C nicht verfärben.

**Beispiel 10**

Versuch 9 wird mit Ethylacrylat anstelle von n-Butylacrylat wiederholt. Der Latex ist koagulatfrei und die Klarfilmbeschaffenheit von aus diesem Latex getrockneten Filmen entspricht der des Beispiels 9.

**Beispiel 11** (Vergleichsbeispiel)

Ein Polybutadienlatex mit einem mittleren Teilchendurchmesser von 80 nm, hergestellt durch Emulsionspolymerisation von Butadien mit Hilfe von 2 Gew.-% Kaliumoleat als Emulgator und 0,23 Gew.-% Kaliumperoxodisulfat, bezogen auf Monomeres, und einem [(Monomer):(Monomer+Wasser)]-Verhältnis von 0,4 wird mit Hilfe einer Lackhantel in einer Naßfilmdicke von 90 µm auf entfettete und vorgeheizte Glasplatten aufgezogen und bei Zimmertemperatur getrocknet, bis der Film klar ist. Anschließend wird der Film bei 150°C 2 Stunden lang getrocknet.

Nach dieser Zeit beobachtet man eine deutliche Vergilbung der Filme entsprechend der Hazen-Farbskala (DIN 53 409) von etwa 40 bis 60.

**Beispiel 12**

Wird der in Beispiel 1 hergestellte Emulgator in einer Menge von 1,5 Gew.-%, bezogen auf Polymerisat, zu dem Latex gemäß Beispiel 11 hinzugefügt, so verbessert sich unter den in Beispiel 11 beschriebenen Versuchsbedingungen die Verfärbung auf einen Wert gemäß der Hazen-Farbskala von 10 bis 15.

**Beispiel 13**

Ein Polybutadienlatex, der gemäß Beispiel 11 mit Hilfe von Kaliumoleat sowie ein anderer Polybutadienlatex, der mit Hilfe von 2 Gew.-% eines handelsüblichen Emulgators auf Basis des Na-Salzes der Dehydroabietinsäure (vgl. Houben-Weyl, Bd. XIV/1, 1961, Seiten 195 - 196) sowie mit 0,23 Gew.-% Kaliumperoxodisulfat analog Beispiel 11 batchweise hergestellt wurde, werden nachfolgend in ihren Klarfilmeigenschaften mit den erfindungsgemäß hergestellten Latices verglichen.

Hierbei werden die Latices nach ihrer Entmonomerisierung auf einen Feststoffgehalt von 40 Gew.-% eingestellt. Anschließend werden Filme mit einer Naßfilm-Schichtdicke von 90 µm auf heiße Glasplatten gezogen, bei 22°C aufgetrocknet und nachfolgend während 60 Minuten auf 150° erhitzt. Beurteilt wird die Verfärbung der Latexfilme nach der Hazen-Farbskala (DIN 53 409) mit Hilfe von Farbscheiben der Fa. HELLIGE GmbH (Freiburg i. Br.), deren Farbton mit dem der Filme verglichen wird.

Wie aus der folgenden Tabelle 1 hervorgeht, weisen die Filme aus den mit erfindungsgemäßen Emulgatoren hergestellten Latices eine nur geringe Vergilbungsneigung auf.

**Tabelle 1**

| Lfd. Nr | entsprechend Beispiel | Polybutadienlatex, hergestellt mit einem Emulgator aus: | Verfärbung der Filme nach Lufttrocknung bei 150°C/1h [Hazen Farbzahl] | mittlerer Latexteilchendurchmesser [nm] (DAV) |
|---|---|---|---|---|
| | | 1 Mol PBSAM und: | | |
| 1 | 5 | 3 Mol n-Hexanol | 5 | 204 |
| 2 | 2 | 2 Mol n-Octanol | 10 | 110 |
| 3 | 4 | 3 Mol n-Octanol | 5 - 10 | 181 |
| 4 | 3 | 2 Mol n-Dodecanol | 10 | 98 |
| 5 | 6 | 3 Mol n-Dodecanol | 15 | 160 |
| 6 | 1 | 1 Mol n-Octadecanol | 0 - 5 | 70 |
| 7 | 7 | 2 Mol n-Octadecanol | 10 | 240 |
| 8* | 11 | Kaliumoleat | 30 - 40 | 80 |
| 9* | 13 | Harzseife, Natriumsalz | 15 - 25 | 100 |

*) Vergleichsbeispiel

**Patentansprüche**

1. Derivate der 2-Phosphonobutan-1,2,4-tricarbonsäure gemäß Formel (I),

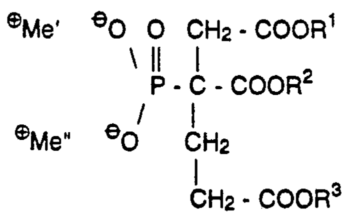

(I)

in der
$^{\oplus}Me'$ und $^{\oplus}Me''$ unabhängig voneinander Natrium, Kalium, Lithium oder Ammonium und die Reste $R^1$ bis $R^3$ unabhängig voneinander Alkylreste und/oder Cycloalkylreste mit 6 bis 20 C-Atomen bedeuten, und einer oder zwei dieser Reste $R^1$ bis $R^3$ unabhängig voneinander auch $^{\oplus}Me'$.

2. Verfahren zur Herstellung von Derivaten der 2-Phosphonobutan-1,2,4-tricarbonsäuren gemäß Anspruch 1 dadurch gekennzeichnet, daß eine Mischung von 2-Phosphonobutan-1,2,4-tricarbonsäure und Wasser mit $C_{6-20}$-Alkoholen im molaren Verhältnis 1 : 1 bis 1 : 4 für Säure zu Alkohol und gegebenenfalls als Schlepper fungierenden Lösungsmitteln unter Abscheidung und Abtrennung von Wasser, gegebenenfalls unter Zusatz die Veresterung katalysierender Zusätze, erhitzt und das noch saure Reaktionsgemisch nach dem Entfernen der als Schlepper verwendeten Lösungsmittel und gegebenenfalls überschüssiger Alkoholbestandteile in Wasser unter Zusatz alkalisch reagierender wäßriger Lösungen gelöst oder emulgiert wird.

3. Verwendung der 2-Phosphonobutan-1,2,4-tricarbonsäurederivate gemäß Anspruch 1 als Emulgatoren für die Emulsionspolymerisation radikalisch polymerisierbarer Monomere oder Monomerengemische.

4. Verwendung der 2-Phosphonobutan-1,2,4-tricarbonsäurederivate gemäß Anspruch 1 als Zusatz zur Verbesserung der Thermostabilität von thermoplastischen Kunststoffen,

5. Verwendung der 2-Phosphonobutan-1,2,4-tricarbonsäurederivate gemäß Anspruch 1 als Zusatz zur Verbesserung der Thermostabilität von Butadienhomopolymerisaten und Butadiencopolymerisaten.

**Claims**

1. Derivatives of 2-phosphonobutane-1,2,4-tricarboxylic acid corresponding to formula (I)

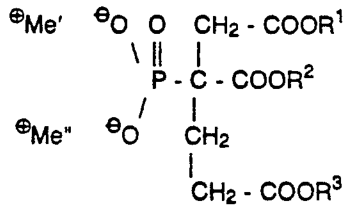

(I)

in which
$^{\oplus}$Me' and $^{\oplus}$Me" independently of one another represent sodium, potassium, lithium or ammonium and the substituents $R^1$ to $R^3$ independently of one another are alkyl radicals and/or cycloalkyl radicals containing 6 to 20 C atoms and one or two of the substituents $R^1$ to $R^3$ independently of one another also represent $^{\oplus}$Me'.

2. A process for the production of the derivatives of 2-phosphonobutane-1,2,4-tricarboxylic acids claimed in claim 1, characterized in that a mixture of 2-phosphonobutane-1,2,4-tricarboxylic acid and water with $C_{6-20}$ alcohols in a molar ratio of 1 : 1 to 1 : 4 for acid to alcohol and, optionally, solvents acting as entraining agents is heated with separation and removal of water, optionally in the presence of additives which accelerate the esterification, and, after removal of the solvent used as entraining agent and any excess alcohol constituents, the still acidic reaction mixture is dissolved or emulsified in water with addition of alkaline-reacting aqueous solutions.

3. The use of the 2-phosphonobutane-1,2,4-tricarboxylic acid derivatives claimed in claim 1 as emulsifiers for the emulsion polymerization of radically polymerizable monomers or monomer mixtures.

4. The use of the 2-phosphonobutane-1,2,4-tricarboxylic acid derivatives claimed in claim 1 as an additive for improving the thermal stability of thermoplastics.

5. The use of the 2-phosphonobutane-1,2,4-tricarboxylic acid derivatives claimed in claim 1 as an additive for improving the thermal stability of butadiene homopolymers and butadiene copolymers.

**Revendications**

1. Dérivés de l'acide 2-phosphonobutane-1,2,4-tricarboxylique répondant à la formule (I) :

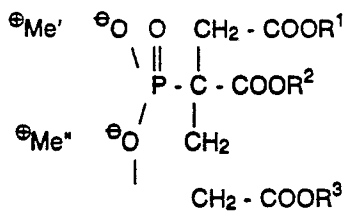

(I)

dans laquelle
$^{\oplus}$Me' et $^{\oplus}$Me" représentent, indépendamment l'un de l'autre, un cation sodium, potassium, lithium ou ammonium, et les restes $R^1$ à $R^3$ représentent, indépendamment l'un de l'autre, des restes alkyles et/ou des restes cycloalkyles ayant 6 à 20 atomes de carbone, et un ou deux de ces restes a $R^1$ à $R^3$ représente(nt) indépendamment l'un de l'autre, également $^{\oplus}$Me'.

2. Procédé pour préparer des dérivés de l'acide 2-phosphonobutane-1,2,4-tricarboxylique selon la revendication 1, caractérisé en ce qu'on chauffe un mélange de l'acide 2-phosphonobutane-1,2,4-tricarboxylique et d'eau avec des alcools en $C_6$-$C_{20}$, selon un rapport molaire de 1 : 1 à 1 : 4 entre l'acide et l'alcool, le mélange contenant éventuellement des solvants jouant le rôle d'entraîneur, avec succion et séparation de l'eau, éventuellement avec addition d'additifs catalysant l'estérification, et l'on soumet le mélange réactionnel encore acide, après l'élimination du ou des solvants servant d'entraîneur et éventuellement élimination de l'excès des constituants alcools, à dissolution ou émulsification dans de l'eau, avec addition de solutions aqueuses à réaction alcaline.

3. Utilisation des dérivés de l'acide 2-phosphonobutane-1,2,4-tricarboxylique selon la revendication 1, comme émulsifiants pour la polymérisation en émulsion de monomères ou de mélanges de monomères polymérisables par voie radicalaire.

4. Utilisation des dérivés de l'acide 2-phosphonobutane-1,2,4-tricarboxylique selon la revendication 1, comme additifs pour améliorer la thermostabilité de matières thermoplastiques.

5. Utilisation des dérivés de l'acide 2-phosphonobutane-1,2,4-tricarboxylique selon la revendication 1, comme additifs pour améliorer la thermostabilité d'homopolymères du butadiène et de copolymères du butadiène.